Europäisches Patentamt

European Patent Office

Office européen des brevets

(19)

(11) EP 0 803 523 B1

(12) EUROPÄISCHE PATENTSCHRIFT

(45) Veröffentlichungstag und Bekanntmachung des Hinweises auf die Patenterteilung:
17.03.2004 Patentblatt 2004/12

(51) Int Cl.[7]: C08G 18/36, C08J 9/08

(21) Anmeldenummer: 97106903.4

(22) Anmeldetag: 25.04.1997

(54) **Verfahren zur Herstellung von dimensionsstabilen und geschlossenzelligen Polyurethan-Hartschaumstoffen mit geringer Dichte**

Process for the preparation of dimensionally stable, closed cell, rigid, low density polyurethane foams

Procédé pour la préparation de mousses de polyuréthane rigides à faible retrait et à cellules fermées et ayant une densité réduite

(84) Benannte Vertragsstaaten:
DE FR GB IT NL SE

(30) Priorität: 25.04.1996 DE 19616579

(43) Veröffentlichungstag der Anmeldung:
29.10.1997 Patentblatt 1997/44

(73) Patentinhaber: BASF AKTIENGESELLSCHAFT
67056 Ludwigshafen (DE)

(72) Erfinder: Fricke, Bernd
32351 Stemwede (DE)

(74) Vertreter: Isenbruck, Günter, Dr. et al
Isenbruck, Bösl, Hörschler, Wichmann, Huhn,
Patentanwälte
Theodor-Heuss-Anlage 12
68165 Mannheim (DE)

(56) Entgegenhaltungen:
EP-A- 0 476 337          EP-A- 0 610 714
FR-A- 1 316 778          US-A- 3 095 386

• DATABASE WPI Week 7941 Derwent
Publications Ltd., London, GB; AN 74889b
XP002036415 "RIGID HEAT INSULATE FOAM" &
SU 642 327 A (IORDANSKAYA) 17.Januar 1979

Bemerkungen:
Die Akte enthält technische Angaben, die nach dem Eingang der Anmeldung eingereicht wurden und die nicht in dieser Patentschrift enthalten sind.

**Beschreibung**

Die Erfindung betrifft ein Verfahren zur Herstellung eines Polyurethan-Hartschaumstoffs durch Umsetzung der folgenden Aufbaukomponenten a) und b)

a) organisches oder modifiziertes organisches Polyisocyanat oder ein Gemisch aus zwei oder mehr davon
b) mindestens eine höhermolekulare Verbindung mit mindestens zwei reaktiven Wasserstoffatomen, die unter einem Polyetherpolyol oder einem Gemisch aus zwei oder mehr davon ausgewählt wird
in Gegenwart
c) eines Treibmittels, enthaltend Tallöl und Wasser, und
d) eines Katalysators,

dadurch gekennzeichnet,
daß als Treibmittel ein Gemisch enthaltend Tallöl und Wasser eingesetzt wird und die Aufbaukomponente b) eine Funktionalität Fkt, berechnet gemäß unten stehender Gleichung (I)

$$Fkt = \frac{\Sigma(n \bullet f^2)}{\Sigma(n \bullet f)} \qquad (I)$$

worin n den molaren Anteil einer Verbindung und f die Funktionalität dieser Verbindung bezeichnet, von 2,5 bis 2,9 besitzt,
wobei ggf. zusätzlich niedermolekulare Kettenverlängerungs- und/oder Vernetzungsmittel (e) sowie weitere Zusatzstoffe (f) eingesetzt werden können.
Ferner betrifft die vorliegende Erfindung einen Polyurethan-Hartschaumstoff herstellbar durch Umsetzung der folgenden Aufbaukomponenten a) und b)

a) organisches oder modifiziertes organisches Polyisocyanat oder ein Gemisch aus zwei oder mehr davon

b) mindestens eine höhermolekulare Verbindung mit mindestens zwei reaktiven Wasserstoffatomen, die unter einem Polyetherpolyol oder einem Gemisch aus zwei oder mehr davon ausgewählt wird
in Gegenwart

c) eines Treibmittels, enthaltend Tallöl und Wasser,

d) eines Katalysators,

dadurch gekennzeichnet,
daß als Treibmittel ein Gemisch enthaltend Tallöl und Wasser eingesetzt wird und die Aufbaukomponente b) eine Funktionalität Fkt, berechnet gemäß unten stehender Gleichung (I)

$$Fkt = \frac{\Sigma(n \cdot f^2)}{\Sigma(n \cdot f)} \qquad (I)$$

worin n den molaren Anteil einer Verbindung und f die Funktionalität dieser Verbindung bezeichnet, von 2,5 bis 2,9 besitzt.
Ferner betrifft die vorliegende Erfindung die Verwendung der erfindungsgemäßen, bzw. erfindungsgemäß hergestellten PU-Hartschaumstoffe als Isolationsmaterial, vorzugsweise zum Ausschäumen von Hohlräumen in Kühlmöbelgehäusen, Speichern oder Heizungselementen sowie als Zwischenschicht (Dämmstoff) für Verbundelemente.
Die Herstellung von Verbund- oder Sandwichelementen, die aufgebaut sind aus einem PU-Hartschaumstoff und mindestens einer Deckschicht aus einem starren oder elastischen Material, wie z.B. Papier, Kunststoffolien, Metallblechen, Glasvliesen, Spanplatten usw., ist bekannt. Bekannt ist ferner die Ausschäumung von Hohlräumen in Haushaltsgeräten, wie Kühlmöbeln, beispielsweise Kühlschränken oder -truhen, oder von Heißwasserspeichern mit PU-Hartschaumstoff als Wärmedämmstoff. Um Schaumfehlstellen zu verhindern, muß hierzu das schäumfähige PU-Reaktionsgemisch innerhalb einer kurzen Zeit in den zu isolierenden Hohlraum eingeführt werden. Zum Ausschäumen derartiger Gegenstände werden üblicherweise Niederdruck- oder vorzugsweise Hochdruckmaschinen eingesetzt.
Eine zusammenfassende Übersicht über die Herstellung von PU-Hartschaumstoffen und ihre Verwendung als Deck- oder vorzugsweise Kernschicht in Verbundelementen sowie ihre Anwendung als Dämmschicht in der Kühloder Heizungstechnik findet sich beispielsweise in "*Polyurethane*", Kunststoff-Handbuch, Band 7, 1. Auflage 1966, herausgegeben von Dr. R. Vieweg und Dr. A. Höchtlen, und 2. Auflage 1983, herausgegeben von Dr. Günther Oertel, Carl Hanser Verlag, München, Wien.

Hierfür geeignete wärme- und kältedämmende PU-Hartschaumstoffe können bekanntermaßen durch Umsetzung von organischen Polyisocyanaten mit einer oder mehreren höhermolekularen Verbindungen mit mindestens zwei reaktiven Wasserstoffatomen, vorzugsweise Polyester- und Polyetherpolyolen, sowie üblicherweise unter Mitverwendung von niedermolekularen Kettenverlängerungsmitteln und/oder Vernetzungsmitteln in Gegenwart von Treibmitteln, Katalysatoren oder ggf. Hilfsmitteln und/oder Zusatzstoffen hergestellt werden. Bei geeigneter Wahl der Aufbaukomponenten können hierbei dimensionsstabile und geschlossenzellige PU-Hartschaumstoffe erhalten werden mit einer relativ niedrigen Dichte und guten mechanischen Eigenschaften.

Als Treibmittel zur Herstellung der wärme- und kältedämmenden PU-Hartschaumstoffe wurden weltweit in großem Maße Fluorchloralkane (FCKW), vorzugsweise Trichlorfluormethan, eingesetzt. Nachteilig an diesen Treibgasen ist lediglich die Belastung der Umwelt, da mittlerweile als erwiesen anzusehen ist, daß sie in der Stratosphäre am Abbau der Ozonschicht beteiligt sind.

Es hat daher nicht an Versuchen gefehlt, die FCKWs durch Treibmittel, die nur geringe oder zweckmäßigerweise keine Umweltschäden verursachen, zumindest teilweise zu ersetzen.

Nach Angaben der EP-A-0 351 614 (US 4 972 002) können als Treibmittel fluorierte Kohlenwasserstoffe, perfluorierte Kohlenwasserstoffe, Schwefelhexafluorid oder Gemische aus mindestens zwei dieser Verbindungen verwendet werden. Da diese fluorierten oder perfluorierten Treibmittel in den Aufbaukomponenten zur Herstellung der Polyisocyanat-Polyadditionsprodukte schweroder unlöslich sind, werden sie in mindestens einem organischen und/ oder modifizierten organischen Polyisocyanat, mindestens einer höhermolekularen Verbindung mit mindestens zwei reaktiven Wasserstoffatomen oder einer Mischung aus mindestens einer höhermolekularen Verbindung mit mindestens zwei reaktiven Wasserstoffatomen und einem niedermolekularen Kettenverlängerungs- und/oder Vernetzungsmittel emulgiert. Nach dieser Methode können zellige Kunststoffe mit gleichmäßiger und feiner Zellstruktur hergestellt werden. Nachteilig an diesem Verfahren ist lediglich die geringe Auswahl an geeigneten fluorierten oder perfluorierten Verbindungen mit einem Siedepunkt in dem erforderlichen Siedepunktsbereich und der hohe Preis für diese Treibmittel. Um zellhaltige Kunststoffe mit der technisch gewünschten Zellstruktur zu erhalten, ist man auf eine eng begrenzte Auswahl von Gemischen aus Perfluorpentan und Perfluorhexan angewiesen.

Zur Herstellung von zellhaltigen Kunststoffen nach dem Polyisocyanat-Polyadditionsverfahren haben sich nach Angaben der DE-A-41 43 148 als Treibmittel (c), ggf. in Verbindung mit Wasser, auch sehr gut Mischungen bewährt, die mindestens eine niedrigsiedende, in den Aufbaukomponenten (a), (b) oder (e) schwer- oder unlösliche, fluorierte oder perfluorierte, organische Verbindung und mindestens ein Isoalkan mit 6 bis 12 Kohlenstoffatomen enthalten.

PU-Hartschaumstoffe mit geringer Wärmeleitfähigkeit werden ferner in der EP-A-0 421 269 (US 5 096 933) beschrieben. Als Treibmittel verwendet werden, vorzugsweise in Kombination mit Wasser, Cyclopentan oder Mischungen, zweckmäßigerweise mit einem Siedepunkt unter 30 °C, die enthalten:

Cyclopentan oder Cyclohexan oder Gemische davon und mindestens eine inerte, niedrigsiedende, mit Cyclopentan oder Cyclohexan oder Gemischen davon homogen mischbare Verbindung, vorzugsweise aus der Gruppe der Alkane, Cycloalkane mit maximal 4 Kohlenstoffatomen, Dialkylether, Cycloalkylether und Fluoralkane.

Diese Treibmittel und ihre Kombinationen besitzen den Nachteil, daß sie brennbar sind und mit Luft explosive Gemische bilden.

Eine weitere Strategie zur Vermeidung bzw. Verringerung des Anteils der FCKWs in Treibmitteln zur Herstellung von PU-Hartschaumstoffen liegt in der Verwendung von Treibmittelgemischen, die neben einem Halogenkohlenwasserstoff und ggf. Wasser eine organische Carbonsäure enthalten, wie in der EP-A-0 409 199 und der EP-A-0 476 337 beschrieben. Dabei werden gemäß der EP-A-0 409 199 typischerweise aliphatische Mono- oder Polycarbonsäuren mit 1 bis 18 Kohlenstoffatomen oder alicyclische Mono- oder Polycarbonsäuren mit 6 bis 10 Kohlenstoffatomen verwendet. Ferner können auch aromatische Mono- oder Polycarbonsäuren eingesetzt werden, mit der Maßgabe, daß die Carboxylgruppe(n) mit Kohlenstoffatomen verbunden ist (sind), die nicht Teil eines aromatischen Ringes darstellen.

Gemäß der EP-A-0 476 337 werden die dort genannten organischen Carbonsäuren vorzugsweise als alleiniges Treibmittel verwendet, sie können jedoch auch in Verbindung mit Wasser oder physikalisch wirkenden, inerten Treibmitteln oder Mischungen aus Wasser und physikalisch wirkenden, inerten Treibmitteln eingesetzt werden. Im Rahmen dieser Anmeldung werden vorzugsweise aliphatische Mono- und Polycarbonsäuren eingesetzt, die ggf. auch weiter substituiert sein können, wie z.B. 2-Chlorpropionsäure, 2,2-Dichlorpropionsäure, 2-Ethylhexansäure, usw.

Ein Verfahren zur Herstellung von Formkörpern einer Rohdichte von mindestens 250 kg/m$^3$ aus Polyurethanschaumstoffen mit einer kompakten Oberfläche durch Formverschäumung eines Polyurethan bildenden Ausgangsgemisches beschreibt die DE-A 38 40 817, wobei dort als Treibmittel organische Carbonsäuren verwendet werden, die ggf. in Gemischen mit Wasser oder physikalischen Treibmitteln in untergeordneten Mengen verwendet werden können.

Derartige Formkörper lassen sich jedoch aufgrund ihrer hohen Dichte nicht als Isolationsmaterial einsetzen.

Weitere Verfahren zur Herstellung von Polyurethan-Schaumstoffen unter Verwendung von Carbonsäuren und Wasser sowie ggf. flüchtigen organischen Substanzen als Treibmittel sind in der DE-A-26 07 999 sowie der US 4 066 580 beschrieben.

Ferner ist ein Verfahren zur Herstellung von Polyurethan-Schaumstoffen durch Umsetzung von Polyisocyanaten mit hydroxylgruppenhaltigen Polyestern und Tallöl in Gegenwart eines Katalysators, eines Emulgators, eines Treibmittels und anderen Zusätzen bekannt (US 3 095 386).

Ein Verfahren zur Herstellung von Polyurethan-Hartschaumstoffen durch Umsetzung von Polyisocyanat mit hydroxylgruppenhaltigem Polyester und Tallöl in Gegenwart eines Katalysators, eines Emulgators, eines Treibmittels und anderer Zusätze ist aus der SU-A 516 705 bekannt. Gemäß dieses Verfahrens wird Tallöl in Mengen von 5 bis 9 Gewichtsteilen, bezogen auf 100 Gewichtsteile Polyester, eingesetzt. Als Treibmittel wird Wasser ggf. als Gemisch mit halogenierten Kohlenwasserstoffen eingesetzt. Als Polyisocyanat wird dort ausschließlich eine als "*Kodizin*" bezeichnete Verbindung eingesetzt.

Jedoch weisen auch die nach diesem Verfahren hergestellten Polyurethan-Hartschaumstoffe eine für die Verwendung als Wärmeisolationsmaterial zu niedrige Dämmeigenschaft und unzureichende mechanische Festigkeit auf, insbesondere deshalb, weil die Menge des verwendeten Tallöls zu niedrig ist, um ein gleichmäßig geschäumtes Produkt, d.h. ein Produkt mit einer homogenen Verteilung der Zellen zu erhalten.

Bei den meisten der oben beschriebenen Verfahren wird $CO_2$ als Treibmittel verwendet. Dieses besitzt zwar nicht die Nachteile der erhöhten Brennbarkeit der Cyclopentane, nicht selten besitzen jedoch die $CO_2$-getriebenen PU-Hartschaumstoffe einen verstärkten Schrumpf, da das aus Isocyanaten durch Reaktion mit Wasser und/oder den Carbonsäuren gebildete $CO_2$ sehr rasch aus den Hartschaumstoffen ausdiffundiert. Dieser Schrumpf ist bisher durch die Verwendung von PU-Hartschaumstoffen mit höherer Rohdichte von $\geq$ 50 kg/m$^3$ minimiert worden, so daß die Herstellung von maßhaltigen und an den Deckschichten haftenden Formteilen aus PU-Hartschaumstoffen möglich war.

Die Verwendung solcher Schaumstoffe mit relativ hohen Dichten führt jedoch zu einem höheren Gewicht der mit diesen Schaumstoffen versehenen Vorrichtungen, was sowohl von den Anwendern als auch den Kunden in zunehmendem Maße als ausgesprochen nachteilig empfunden wird.

Es bestand daher das Bedürfnis, die Rohdichte von wasser- (bzw. $CO_2$-) getriebenen PU-Hartschaumstoffen zu reduzieren, ohne die anderen Gebrauchseigenschaften zu verschlechtern.

Somit bestand die primäre Aufgabe der vorliegenden Erfindung darin, PU-Hartschaumstoffe bereitzustellen, die hervorragende Wärmeisolationseigenschaften und mechanische Eigenschaften aufweisen, die keinem Schrumpf unterliegen und deren Rohdichte gegenüber den herkömmlichen Hartschaumstoffen erniedrigt ist.

Hierbei sollte auf die Verwendung von explosiven, toxischen und/oder umweltschädlichen Treibmitteln vollständig verzichtet werden. Die Polyolund Polyisocyanatkomponente (a) bzw. (b) sollten lagerbeständig sein und die Reaktionsmischung zur Herstellung der PU-Hartschaumstoffe sollte sehr gut fließfähig sein und schrumpffrei aushärten. Beim Ausschäumen von Gehäuseteilen sollte ein starker Verbund zwischen Deckschicht und PU-Hartschaumstoff entstehen. Der entstehende PU-Hartschaumstoff muß geschlossenzellig sein.

Diese Aufgabe konnte überraschenderweise durch das eingangs erwähnte erfindungsgemäße Verfahren zur Herstellung von dimensionsstabilen und geschlossenzelligen PU-Hartschaumstoffen gelöst werden, indem als eine Aufbaukomponente (b) mindestens ein Polyetherpolyol mit einer Funktionalität, wie eingangs definiert, von 2,5 bis 2,9 mit weiteren bei der Polyurethan-Herstellung üblichen Komponenten umgesetzt wird, wobei ein Tallöl und Wasser enthaltendes Treibmittel verwendet wird.

Durch das erfindungsgemäße Verfahren gelingt es, die Rohdichte der dimensionsstabilen und geschlossenzelligen PU-Hartschaumstoffe um mindestens ca. 10 kg/m$^3$ zu reduzieren. Durch den Einsatz von Tallöl im PU-Hartschaumstoff wird jedoch nicht nur die Rohdichte vermindert, sondern das aufschäumende PU-Reaktionsgemisch verteilt sich auch gleichmäßiger im herzustellenden Formteil. Daraus resultiert eine engere Verteilung der Rohdichte im hergestellten Formteil, d.h. das hergestellte Formteil bzw. der Hartschaumstoff weist eine gleichmäßigere Verteilung der geschlossenen Zellen innerhalb desselben auf.

Ferner weisen die erfindungsgemäßen PU-Hartschaumstoffe in ihren Poren keine schädlichen und nachteiligen Gase auf. Insbesondere weisen sie weder die Ozonschicht schädigende Gase noch entflammbare Gase auf.

Zu den verwendeten Aufbaukomponenten ist folgendes auszuführen:

Aufbaukomponente a)

Als organische Polyisocyanate kommen die an sich bekannten aliphatischen, cycloaliphatischen, araliphatischen und vorzugsweise aromatischen mehrwertigen Isocyanate in Betracht.

Im einzelnen seien beispielhaft genannt:

Alkylendiisocyanate mit 4 bis 12 Kohlenstoffatomen im Alkylenrest, wie z.B. 1,12-Dodecandiisocyanat, 2-Ethyltetramethylendiisocyanat-1,4, 2-Methylpentamethylendiisocyanat-1,5, Tetramethylendiisocyanat-1,4 und vorzugsweise Hexamethylendiisocyanat-1,6;

cycloaliphatische Diisocyanate, wie z.B. Cyclohexan-1,3-diisocyanat und Cyclohexan-1,4-diisocyanat sowie beliebige Gemische dieser Isomeren, 1-Isocyanato-3,3,5-trimethyl-5-isocyanatomethylcyclohexan(Isophorondiisocyanat), 2,4- und 2,6-Hexahydrotoluylendiisocyanat sowie die entsprechenden Isomerengemische, 4,4'-, 2,2'- und 2,4'-Dicyclohexylmethan-diisocyanat sowie die entsprechenden Isomerengemische;

araliphatische Diisocyanate, wie z.B. 1,4-Xylylendiisocyanat und Xylylendiisocyanat-Isomerengemische; und

aromatische Di- und Polyisocyanate, wie z.B. 2,4- und 2,6-Toluylendiisocyanat und die entsprechenden Isomerengemische, 4,4'-, 2,4'- und 2,2'-Diphenylmethandiisocyanat und die entsprechenden Isomerengemische, Gemische aus 4,4'- und 2,4'-Diphenylmethandiisocyanaten, Polyphenyl-polymethylenpolyisocyanate, Gemische aus 4,4'-, 2,4'- und 2,2'-Diphenylmethandiisocyanaten und Polyphenylpolymethylenpolyisocyanaten (Roh-MDI) und Gemische aus Roh-MDI und Toluylendiisocyanaten.

Dabei werden die aromatischen Di- und Polyisocyanate bevorzugt eingesetzt. Die oben erwähnten organischen Di- und Polyisocyanate können einzeln oder in Form von Gemischen eingesetzt werden.

Besonders bevorzugt werden als organische Polyisocyanate (a) aromatische Polyisocyanate, ausgewählt aus der Gruppe 4,4'-, 2,4'- und 2,2'-Diphenylmethandiisocyanat, Polyphenylpolymethylenpolyisocyanate, 2,4- und 2,6-Toluylendiisocyanat, Mischungen aus Diphenylmethandiisocyanaten und Polyphenylpolymethylenpolyisocyanaten mit einem Diphenylmethandiisocyanat-Isomerengehalt von 30 bis 80 Gew.-% und Gemische davon, verwendet.

Diese organischen Polyisocyanate können nach bekannten Verfahren hergestellt werden. Vorzugsweise werden sie hergestellt durch Phosgenierung der entsprechenden Polyamine zur Bildung von Polycarbaminsäurechloriden und deren thermische Spaltung bei erhöhten Temperaturen in das organische Polyisocyanat und Chlorwasserstoff oder nach phosgenfreien Verfahren, z.B. durch Umsetzung der entsprechenden Polyamine mit Harnstoff und Alkohol zu Polycarbaminsäureestern und deren thermische Spaltung bei erhöhten Temperaturen in das Polyisocyanat und Alkohol.

Häufig werden auch sogenannte modifizierte mehrwertige Isocyanate, d.h. Produkte, die durch chemische Umsetzung organischer Di- und/oder Polyisocyanate erhalten werden, verwendet. Beispielhaft genannt seien Ester-, Harnstoff-, Biuret-, Allophanat-, Uretonimin-, Carbodiimid-, Isocyanurat-, Uretdion- und/oder Urethangruppen enthaltende Di- und/oder Polyisocyanate.

Im einzelnen kommen beispielsweise in Betracht:

Urethangruppen enthaltende organische, vorzugsweise aromatische Polyisocyanate mit NCO-Gehalten von 33,6 bis 15 Gew.-%, vorzugsweise von 31 bis 21 Gew.-%, bezogen auf das Gesamtgewicht, beispielsweise mit niedermolekularen Diolen, Triolen, Dialkylenglycolen, Trialkylenglycolen oder Polyoxyalkylenglycolen mit Molekulargewichten bis 6000 modifiziertes 4,4'-Diphenylmethandiisocyanat, modifizierte 4,4'- und 2,4'-Diphenylmethandiisocyanatmischungen, oder modifiziertes Roh-MDI oder 2,4- bzw. 2,6-Toluylendiisocyanat, wobei als Di- bzw. Polyoxyalkylenglycole, die einzeln oder als Gemisch eingesetzt werden können, beispielsweise genannt seien:

Diethylen-, Dipropylenglycol, Polyoxyethylen-, Polyoxypropylen- und Polyoxypropylenpolyoxyethylenglycole, -triole und/oder -tetrole.

Geeignet sind auch NCO-Gruppen enthaltende Prepolymere mit NCO-Gehalten von 25 bis 3,5 Gew.-%, vorzugsweise von 21 bis 14 Gew.-%, bezogen auf das Gesamtgewicht, hergestellt aus den nachfolgend beschriebenen Polyetherpolyolen und 4,4'-Diphenylmethandiisocyanat, Mischungen aus 2,4'und 4,4'-Diphenylmethandiisocyanat, 2,4- und/oder 2,6-Toluylendiisocyanaten oder Roh-MDI.

Bewährt haben sich ferner flüssige Carbodiimidgruppen und/oder Isocyanuratgruppen enthaltende Polyisocyanate mit NCO-Gehalten von 33,6 bis 15, vorzugsweise 31 bis 21 Gew.-%, bezogen auf das Gesamtgewicht, z.B. auf Basis von 4,4'-, 2,4'- und/oder 2,2'-Diphenylmethandiisocyanat und/oder 2,4-und/oder 2,6-Toluylendiisocyanat.

Die modifizierten Polyisocyanate können miteinander oder mit unmodifizierten organischen Polyisocyanaten wie z.B. 2,4'-, 4,4'-Diphenylmethandiisocyanat, Roh-MDI, 2,4- und/oder 2,6-Toluylendiisocyanat ggf. vermischt werden.

Besonders bewährt haben sich als organische Polyisocyanate die folgenden, die auch bevorzugt bei der Herstellung der PU-Hartschaumstoffe verwendet werden:

Mischungen aus modifizierte Urethangruppen enthaltenden organischen Polyisocyanaten mit einem NCO-Gehalt von 33,6 bis 15 Gew.-%, insbesondere solche auf Basis von Toluylendiisocyanaten, 4,4'-Diphenylmethandiisocyanat, Diphenylmethandiisocyanat-Isomerengemischen oder Roh-MDI und insbesondere 4,4'-, 2,4'- und 2,2'-Diphenylmethandiisocyanat, Polyphenylpolymethylenpolyisocyanat, 2,4- und 2,6-Toluylendiisocyanat, Roh-MDI mit einem Diphenylmethandiisocyanat-Isomerengehalt von 30 bis 80 Gew.-%, vorzugsweise von 35 bis 45 Gew.-%, und Mischungen aus mindestens zwei der genannten Polyisocyanate, z.B. Roh-MDI oder Mischungen aus Toluylendiisocyanaten und Roh-MDI. Besonders bevorzugt werden als organische Polyisocyanate (a) Mischungen aus Diphenylmethandiisocyanaten und Polyphenylpolymethylenpolyisocyanaten mit einem Diphenylmethandiisocyanat-Isomerengehalt von 30 bis 80 Gew.-% verwendet.

Aufbaukomponente b)

Als höhermolekulare Verbindungen mit mindestens zwei reaktiven Wasserstoffatomen (b) kommen Polyetherpolyole mit einer Funktionalität von 2,5 bis 2,9 zur Anwendung. Die Funktionalität Fkt der Aufbaukomponente (b) wird gemäß folgender Beziehung berechnet.

$$Fkt = \frac{\Sigma(n \cdot f^2)}{\Sigma(n \cdot f)} \tag{I}$$

worin n den molaren Anteil einer Verbindung und f die Funktionalität dieser Verbindung bezeichnet.

Die Funktionalität der obigen Aufbaukomponenten beträgt 2,5 bis 2,9 und besonders bevorzugt 2,6 bis 2,8.

Die Hydroxylzahl der verwendeten Polyetherpolyole beträgt im allgemeinen 100 bis 850, vorzugsweise 120 bis 770, weiter bevorzugt 240 bis 570.

Beispielhaft genannt seien Polyetherpolyole, wobei dieser Begriff auch Polythioetherpolyole umfaßt.

Anwendung finden auch Gemische aus mindestens zwei der oben genannten höhermolekularen Verbindungen mit mindestens zwei reaktiven Wasserstoffatomen (b) sowie mit Polyhydroxylverbindungen der oben beschriebenen Art, deren Hydroxylzahlen kleiner als 100 sind, sofern die Gemische eine durchschnittliche Hydroxylzahl im vorgenannten Bereich aufweisen.

Die vorgenannten Polyetherpolyole können nach bekannten Verfahren, beispielsweise durch anionische Polymerisation mit Alkalihydroxiden, wie Natrium- oder Kaliumhydroxid oder Alkalialkoholaten, wie Natriumethylat, Natrium- oder Kaliumethylat oder Kaliumisopropylat als Katalysatoren und unter Zusatz mindestens eines Startermoleküls, das 2 bis 8, vorzugsweise 3 bis 8, reaktive Wasserstoffatome gebunden enthält, oder durch kationische Polymerisation mit Lewis-Säuren, wie Antimonpentachlorid, Borfluorid-Etherat u.a. oder Bleicherde als Katalysatoren aus einem oder mehreren Alkylenoxiden mit 2 bis 4 Kohlenstoffatomen im Alkylenrest hergestellt werden. Geeignete Alkylenoxide sind beispielsweise Tetrahydrofuran, 1,3-Propylenoxid, 1,2- bzw. 2,3-Butylenoxid, Styroloxid und vorzugsweise Ethylenoxid und 1,2-Propylenoxid. Die Alkylenoxide können einzeln, alternierend nacheinander oder als Gemische verwendet werden.

Als Startermoleküle kommen beispielsweise in Betracht:

Wasser; organische Dicarbonsäuren, wie z.B. Bernsteinsäure, Adipinsäure, Phthalsäure und Terephthalsäure; aliphatische und aromatische, ggf. N-mono-, N,N- und N,N'-dialkylsubstituierte Diamine mit 1 bis 4 Kohlenstoffatomen im Alkylrest, wie z.B. ggf. mono- und dialkylsubstituiertes Ethylendiamin, Diethylentriamin, Triethylentetramin, 1,3-Propylendiamin, 1,3- bzw. 1,4-Butylendiamin, 1,2-, 1,3-, 1,4-, 1,5- und 1,6-Hexamethylendiamin, Anilin, Phenylendiamine, 2,3-, 2,4-, 3,4- und 2,6-Toluylendiamin und 4,4'-, 2,4'und 2,2'-Diaminodiphenylmethan.

Als Startermoleküle kommen ferner in Betracht:

Alkanolamine, wie z.B. Ethanolamin, N-Methyl- und N-Ethyl-ethanolamin; Dialkanolamine, wie z.B. Diethanolamin, N-Methyl- und N-Ethyl-diethanolamin; und Trialkanolamine, wie z.B. Triethanolamin und Ammoniak; und mehrwertige, insbesondere 2- und/oder 3-wertige Alkohole, wie Ethandiol, Propandiol-1,2 und -1,3, Diethylenglycol, Dipropylenglycol, Butandiol-1,4, Hexandiol-1,6, Glycerin, Trimethylolpropan, Pentaerythrit, Sorbit und Saccharose; mehrwertige Phenole, wie z.B. 4,4'-Dihydroxydiphenylmethan und 4,4'-Dihydroxydiphenylpropan-2,2; Resole, wie z.B. oligomere Kondensationsprodukte aus Phenol und Formaldehyd und Mannich-Kondensate aus Phenolen, Formaldehyd und Dialkanolaminen sowie Melamin.

Als höhermolekulare Verbindungen (b) werden vorzugsweise Polyetherpolyole mit einer Funktionalität von unter 3 und einer Hydroxylzahl von 100 bis 850 verwendet, die hergestellt werden durch anionische Polyaddition von mindestens einem Alkylenoxid, vorzugsweise Ethylenoxid oder 1,2-Propylenoxid oder 1,2-Propylenoxid und Ethylenoxid, an mindestens eine, mindestens eine Hydroxyl-, Amino- und/oder Carboxylgruppen aufweisende aromatische Verbindung mit mindestens zwei reaktiven Wasserstoffatomen als Startermoleküle.

Als Beispiele für derartige Startermoleküle sind die folgenden zu nennen:

Aromatische Polycarbonsäuren, wie z.B. Hemimellithsäure, Trimellithsäure, Trimesinsäure, Phthalsäure, Isophthalsäure und Terephthalsäure, wobei vorzugsweise Phthalsäure, Isophthalsäure und Terephthalsäure verwendet werden, oder Gemische aus mindestens zwei der genannten Polycarbonsäuren; Hydroxycarbonsäuren, wie z.B. Salicylsäure, p- und m-Hydroxybenzoesäure und Gallussäure, Aminocarbonsäuren, wie z.B. Anthranilsäure, m- und p-Aminobenzoesäure; Polyphenole, wie z.B. Resorcin und vorzugsweise Dihydroxydiphenylmethane und -propane-2,2, Mannich-Kondensate aus Phenolen, Formaldehyd und Dialkanolaminen, vorzugsweise Diethanolamin; und vorzugsweise aromatische Polyamine, wie z.B. 1,2-, 1,3-, und 1,4-Phenylendiamin, und insbesondere 2,3-, 2,4-, 3,4- und 2,6-Toluylendiamin, 4,4'-, 2,4'- und 2,2'-Diaminodiphenylmethan, Polyphenylpolymethylenpolyamine; Gemische aus Diaminodiphenylmethanen und Polyphenylpolymethylenpolyaminen, wie sie z.B. durch Kondensation von Anilin mit Formaldehyd gebildet werden, und Gemische aus mindestens zwei der genannten Polyamine.

Die Herstellung von Polyetherpolyolen unter Verwendung derartiger mindestens difunktioneller aromatischer Startermoleküle ist bekannt und wird beispielsweise in den offengelegten Patentanmeldungen DD-A-290 201, DD-A-290 202, DE-A-34 12 082, DE-A-42 32 970 und GB-A-2 187 449 beschrieben.

Die erfindungsgemäß als Komponente b) verwendeten Polyetherpolyole oder deren Gemische besitzen eine Funktionalität, wie oben definiert, von 2,5 bis 2,9 und weiter bevorzugt 2,6 bis 2,8. Das bedeutet, daß es im Rahmen des erfindungsgemäßen Verfahrens durchaus möglich ist, daß einzelne Polyetherpolyole eines Gemischs von Polyetherpolyolen, die als Komponente b) eingesetzt werden, eine Funktionalität besitzen können, die höher als 2,9 ist, solange die Gesamtfunktionalität des als Komponente b) eingesetzten Gemischs 2,5 bis 2,9 beträgt.

Die Hydroxylzahlen betragen 100 bis 850, vorzugsweise 120 bis 770 und weiter bevorzugt 240 bis 570.

Als Polyetherpolyole eignen sich ferner Melamin-Polyetherpolyol-Dispersionen gemäß EP-A-0 023 987 (US 4 293 657), Polymer-Polyetherpolyol-Dispersionen, hergestellt aus Polyepoxiden und Epoxidharzhärtern in Gegenwart von Polyetherpolyolen gemäß DE-A-0 029 43 689 (US 43 05 861), Dispersionen von aromatischen Polyestern in Polyhydroxylverbindungen gemäß EP-A-0 062 204 (US 44 35 537) oder DE-A 33 00 474, Dispersionen von organischen und/oder anorganischen Füllstoffen in Polyhydroxylverbindungen gemäß EP-A-0 011 751 (US 42 43 755), Polyharnstoff-Polyetherpolyol-Dispersionen gemäß DE-A-31 25 402, Tris(hydroxyalkyl)isocyanat-Polyetherpolyol-Dispersionen gemäß EP-A-0 136 571 (US 4 514 526) und Kristallitsuspensionen gemäß DE-A-33 42 176 und DE-A-33 42 177 (US 4 560 708), wobei die Ausführungen in den genannten Patentveröffentlichungen als Bestandteil der Patentbeschreibung zu betrachten sind.

Die Polyetherpolyole können einzeln oder in Form von Gemischen verwendet werden. Ferner können sie mit den Pfropfpolyether-olyolen sowie den hydroxylgruppenhaltigen phenolischen Polyolen gemischt werden.

Unter diesen phenolischen und halogenierten phenolischen Polyolen sind insbesondere Benzylethergruppen aufweisende Resolpolyole zu nennen. Resolpolyole dieser Art können beispielsweise aus Phenol, Formaldehyd, zweckmäßigerweise Paraformaldehyd und mehrwertigen aliphatischen Alkoholen hergestellt werden, und werden z. B. in den EP-A-0 116 308 und EP-A-0 116 310 beschrieben.

Als höhermolekulare Verbindungen (b) werden insbesondere Gemische aus Polyetherpolyolen, die mindestens ein Polyetherpolyol auf Basis eines aromatischen, polyfunktionellen Startermoleküls und mindestens ein Polyetherpolyol auf Basis eines nichtaromatischen Startermoleküls, vorzugsweise eines 3- bis 8-wertigen Alkohols enthalten, verwendet.

Wie sich aus obigem ergibt, wird die höhermolekulare Verbindung (b) ausgewählt aus der Gruppe bestehend aus Polyetherpolyolen, die hergestellt werden durch anionische Polyaddition von mindestens einem Alkylenoxid an mindestens eine, mindestens eine Hydroxyl-, Amino- oder Carboxylgruppe oder mehrere dieser Gruppen aufweisende Verbindung mit mindestens zwei reaktiven Wasserstoffatomen als Startermolekül, und Polyetherpolyolen, die hergestellt werden durch anionische Polyaddition von mindestens einem Alkylenoxid an mindestens ein Startermolekül aus der Gruppe der Polycarbonsäuren, Hydroxycarbonsäuren und Aminocarbonsäuren, der Mono- und Polyamine, der Polyphenole und der Mannich-Kondensate aus Phenolen, Formaldehyd und Dialkanolaminen.

Als Alkylenoxide werden bevorzugt 1,2-Propylenoxid oder Ethylenoxid oder Gemische davon verwendet.

## Treibmittel (c)

Als Treibmittel zur Herstellung der PU-Hartschaumstoffe findet ein Tallöl und Wasser enthaltendes Treibmittel Verwendung. Der Begriff "*Tallöl*" bezeichnet eine Fraktion des als Nebenprodukt bei der Erzeugung von Sulfat-Zellstoff durch Aufschluß von harzreichen Holzarten, wie z.B. Fichte und Kiefer, nach dem Sulfat-Prozeß gewonnenen Roh-Tallöls. Durch Destillation wird das so gewonnene Roh-Tallöl in Vorlauf und Tallpech, die überwiegend verbrannt werden, sowie in Tallöl und Tallharz fraktioniert.

Das hier gemeinte Tallöl besteht zu mindestens ungefähr 65 Gew.-% (bei einem Harzsäureanteil von ungefähr 35 Gew.-%) aus Fettsäuren, vorzugsweise zu mindestens ungefähr 95 Gew.-% aus Fettsäuren. Dabei beträgt der Anteil der einzelnen Fettsäuren, jeweils bezogen auf die Gesamtmenge der Fettsäuren, an Phenol- und konjugierten $C_{18}$-Fettsäuren ungefähr 45 bis ungefähr 65 Gew.-% und an gesättigten Fettsäuren ungefähr 1 bis ungefähr 3 Gew.-%, wobei sich die Summe der Anteile auf 100% addieren und die tatsächlichen Anteile der jeweiligen Fettsäure(gruppen) von der Art des verarbeiteten Holzes und dessen geographischer Herkunft abhängen.

Besonders bevorzugt wird ein Tallöl eingesetzt, das aus ungefähr 96 Gewichts-% Fettsäuren, ungefähr 2 Gew.-% Harzsäuren und ungefähr 2 Gewichts-% unverseifbaren Bestandteilen besteht, wobei sich die Summen dieser Bestandteile zu 100% addieren. Dabei beträgt der Anteil der einzelnen Fettsäuren, jeweils bezogen auf die Gesamtmenge der Fettsäuren, an Phenolund konjugierten $C_{18}$-Fettsäuren ungefähr 93 Gew.-% und an ungesättigten Fettsäuren ungefähr 1 bis ungefähr 3 Gew.-%.

Der Gehalt an Tallöl im Reaktionsgemisch zur Herstellung der PU-Hartschaumstoffe beträgt vorzugsweise mehr als 9 Gew.-Teile, weiter bevorzugt 10 bis 20 Gew.-Teile und insbesondere 10 bis 15 Gew.-Teile, jeweils bezogen auf 100 Gew.-Teile der höhermolekularen Verbindung (b).

Der Anteil des eingesetzten Wassers im Reaktionsgemisch beträgt vorzugsweise 1 bis 10 Gew.-Teile, weiter bevorzugt 2 bis 8 Gew.-Teile und insbesondere 4 bis 6 Gew.-Teile, ebenfalls jeweils bezogen auf 100 Gew.-Teile der höhermolekularen Verbindung (b).

In einer weiter bevorzugten Ausführungsform der vorliegenden Erfindung enthält das Treibmittel ferner mindestens eine Carbonsäure mit mehr als 3 C-Atomen, die verschieden von den sich im Tallöl befindlichen Fettsäuren ist. Dabei kommen sowohl gesättigte, einfach ungesättigte und mehrfach ungesättigte Carbonsäuren sowie deren Gemische in Betracht. Vorzugsweise werden im erfindungsgemäßen Verfahren in 2-Stellung verzweigte cyclische, acyclische, Mono- oder Dicarbonsäuren, die im Kohlenstoffgerüst auch olefinische Doppelbindungen oder aromatische Strukturen oder beides enthalten können, oder deren Gemische eingesetzt. In Tabelle 1 sind beispielhaft einige erfindungsgemäß einsetzbare Carbonsäuren aufgeführt.

## Tabelle 1

$$\text{Carbonsaeure} \qquad \text{HOOC} \longrightarrow \text{C} \begin{cases} R^1 \\ R^2 \\ R^3 \end{cases}$$

| $R^1$ | $R^2$ | $R^3$ | Name | Summen-formel | Mol-gew. | Kp/°C | Fp/°C |
|---|---|---|---|---|---|---|---|
| H | $CH_3$ | $CH_3$ | Isobut-tersäu-re | $C_4H_8O_2$ | 88 | 154-155 | |
| H | $(CH_2)_3$ | | Cyclo-butan-carbon-säure | $C_5H_8O_2$ | 100 | 196 | |
| H | $CH_3$ | $C_2H_3$ | 2-Me-thyl-3-buten-säure | $C_5H_8O_2$ | 100 | $_{0,1}$42-43 | |
| H | $CH_3$ | $C_2H_5$ | 2-Me-thylbut-tersäu-re | $C_5H_{10}O_2$ | 102 | $_{15}$79 | |
| COOH | $(CH_2)_3$ | | Cyclo-butan-1,1-di-carbon-säure | $C_6H_8O_4$ | 144 | | 158 |
| H | $(CH_2)_4$ | | Cyclo-pentan-carbon-säure | $C_6H_{10}O_2$ | 114 | $_{11}$104 | 4 |
| H | $(CH_2)_5$ | | Cyclo-hexan-carbon-säure | $C_7H_{12}O_2$ | 128 | | 25-28 |
| H | $CH_3$ | $-CH(CH_3)COOH$ | 2,3-Di-methyl-bern-stein-säure | $C_6H_{10}O_4$ | 146 | | 119 |
| H | $C_2H_5$ | $C_2H_5$ | 2-Et-hylbut-tersäu-re | $C_6H_{12}O_2$ | 116 | 193-196 | |
| H | $C_2H_5$ | $C_4H_9$ | 2-Ethyl-capron-säure | $C_8H_{16}O_2$ | 144 | $_{11}$113-118 | |

| R$^1$ | R$^2$ | R$^3$ | Name | Summen-formel | Mol-gew. | Kp/°C | Fp/°C |
|---|---|---|---|---|---|---|---|
| H | C$_2$H$_5$ | C$_6$H$_5$ | R-2-Phenyl-pro-pion-säure | C$_9$H$_{10}$O$_2$ | 150 | | 30 |
| CH$_3$ | (C$_{17}$H$_{26}$) | | Abie-tinsäu-re | C$_{20}$H$_{30}$O$_2$ | 302,5 | | 159 |

Als weitere erfindungsgemäß verwendbare Carbonsäuren können genannt werden:

Mono- und Polycarbonsäuren, z.B. Dicarbonsäuren, die ggf. chemisch inerte Substituenten, wie z.B. Halogenatome, wie z.B. Fluor- und/oder Chloratome, und Alkylreste, wie z.B. Methyl- oder Ethylreste, tragen. Beispielhaft können ggf. substituierte Monocarbonsäuren, wie z.B. Essigsäure, Propionsäure, 2-Chlorpropionsäure, 3-Chlorpropionsäure, 2,2-Dichlorpropionsäure, Hexansäure, 2-Ethylhexansäure, Dodecansäure, Palmitinsäure, Stearinsäure, Ölsäure, 3-Mercaptopropionsäure, Glycolsäure, 3-Hydroxypropionsäure, Milchsäure, Bezinolsäure, 2-Aminopropionsäure, Benzoesäure, 4-Methylbenzoesäure, Salicylsäure und Antranilsäure, und ggf. substituierte Polycarbonsäuren, vorzugsweise Dicarbonsäuren, wie z.B. Oxalsäure, Malonsäure, Bernsteinsäure, Fumarsäure, Maleinsäure, Glutarsäure, Adipinsäure, Sebacinsäure, Dodecandisäure, Weinsäure, Phthasäure, Isophthasäure und Citronensäure genannt werden.

Weiterhin sind mit Phenylresten substituierte Carbonsäuren, wie z.B. Phenylessigsäure, Zimtsäure, Acetylsalicylsäure, Phenoxyessigsäure, Heterozyklen aufweisende Carbonsäuren, wie z.B. Nikotinsäure, tertiäre Aminogruppen enthaltende Säuren, wie z.B. Dimethylaminozimtsäure, und Nitro-Gruppen enthaltende Carbonsäuren, wie z.B. Nitrozimtsäure sowie deren Gemische, zu nennen.

Dabei werden vorzugsweise aliphatische Monocarbonsäuren mit einem Molekulargewicht von 46 bis 300 und insbesondere von 60 bis 135, wie z.B. Essigsäure, Propionsäure und 2-Ethylhexansäure und insbesondere Essigsäure eingesetzt.

Der Anteil der Carbonsäure oder der Carbonsäuregemische innerhalb der zur Herstellung der PU-Hartschaumstoffe verwendeten Reaktionsgemische beträgt im allgemeinen 0,5 bis 30 Gew.-Teile, vorzugsweise 1 bis 15 Gew.-Teile und insbesondere 1 bis 8 Gew.-Teile, jeweils bezogen auf 100 Gew.-Teile von mindestens einer höhermolekularen Verbindung mit mindestens zwei reaktiven Wasserstoffatomen (b).

Zur Herstellung der PU-Hartschaumstoffe wird das Treibmittel oder das Treibmittelgemisch vorzugsweise nach an sich bekannten Methoden mit mindestens einer der Aufbaukomponenten (b) oder falls vorhanden (e) zur Herstellung des PU-Hartschaumstoffs vermischt, oder es wird direkt dem Reaktionsgemisch, zweckmäßigerweise mittels einer geeigneten Mischvorrichtung, zugeführt.

Katalysatoren (d)

Als Katalysatoren (d) werden insbesondere Verbindungen verwendet, die die Reaktion der höhermolekularen Verbindungen mit mindestens zwei reaktiven Wasserstoffatomen (b) und ggf. der Komponente (e) mit den Polyisocyanaten (a) stark beschleunigen. In Betracht kommen organische Metallverbindungen, vorzugsweise organische Zinnverbindungen, wie Zinn(II)-salze von organischen Carbonsäuren, wie z.B. Zinn(II)-acetat, Zinn(II)-octoat, Zinn(II)-ethylhexoat und Zinn(II)-laurat und die Dialkylzinn(IV)-salze von organischen Carbonsäuren, wie z.B. Dibutylzinn-diacetat, Dibutylzinn-dilaurat, Dibutylzinn-maleat und Dioctylzinn-diacetat. Die organischen Metallverbindungen werden allein oder vorzugsweise in Kombination mit stark basischen Aminen eingesetzt. Genannt seien beispielsweise Amidine, wie 1,8-Diaza-bicyclo(5.4.0)undecen-7, 2,3-Dimethyl-3,4,5,6-tetrahydropyrimidin; tertiäre Amine, wie Triethylamin, Tributylamin, Dimethylbenzylamin, N-Methyl-, N-Ethyl-, N-Cyclohexylmorpholin, N,N,N',N'-Tetramethylethylendiamin, N,N,N',N'-Tetramethylbutandiamin oder -hexandiamin, Pentamethyldiethylentriamin, Tetramethyldiaminoethylether, Bis(dimethylaminopropyl)harnstoff, Dimethylpiperazin, 1,2-Dimethylimidazol, 1-Aza-bicyclo(3,3,0)octan und vorzugsweise 1,4-Diaza-bicyclo(2,2,2)octan; und Alkanolaminverbindungen, wie z.B. Triethanolamin, Triisopropanolamin, N-Methyl- und N-Ethyl-diethanolamin und Dimethylethanolamin.

Als Katalysatoren kommen ferner in Betracht: Tris(dialkylaminoalkyl)-shexahydrotriazine, insbesondere 1,3,5-Tris(N,N-dimethylaminopropyl)-s-hexahydrotriazin; Tetraalkylammoniumhydroxide, wie z.B. Tetramethylammoniumhydroxid; Alkalihydroxide, wie z.B. Natriumhydroxid; und Alkalialkoholate, wie z.B. Natriummethylat und Kaliumisopropylat; sowie Alkalisalze von langkettigen Fettsäuren mit 10 bis 20 C-Atomen, die ggf. durch OH-Gruppen substituiert sein können.

Vorzugsweise verwendet werden 0,001 bis 5 Gew.-%, insbesondere 0,05 bis 2,5 Gew.-% Katalysator, bzw. Katalysatorkombination bezogen auf das Gewicht der Komponente (b).

Aufbaukomponente e)

Die erfindungsgemäß hergestellten PU-Hartschaumstoffe können ohne oder unter Mitverwendung von Kettenverlängerungs- oder Vernetzungsmitteln hergestellt werden.

Zur Modifizierung der mechanischen Eigenschaften kann sich jedoch der Zusatz von difunktionellen Kettenverlängerungsmitteln, tri- und höherfunktionellen Vernetzungsmitteln oder ggf. auch Gemischen davon als vorteilhaft erweisen. Als Kettenverlängerungs- und/oder Vernetzungsmittel werden vorzugsweise Alkanolamine und insbesondere Diole oder Triole mit Molekulargewichten kleiner als 400, vorzugsweise 60 bis 300, oder Gemische davon, verwendet. In Betracht kommen beispielsweise Alkanolamine, wie z.B. Ethanolamin, Isopropanolamin, oder Gemische davon; Dialkanolamine, wie z.B. Diethanolamin, N-Methyl-, N-Ethyldiethanolamin, Diisopropanolamin; Trialkanolamine, wie z.B. Triethanolamin und Triisopropanolamin; und Additionsprodukte aus Ethylenoxid oder 1,2-Propylenoxid und Alkylendiaminen mit 2 bis 6 C-Atomen im Alkylenrest, wie z.B. N,N,N',N'-Tetra(2-hydroxyethyl)ethylendiamin und N,N,N',N'-Tetra(2-hydroxypropyl)ethylendiamin; aliphatische, cycloaliphatische oder araliphatische Diole mit 2 bis 14, vorzugsweise 4 bis 10 Kohlenstoffatomen, wie z.B. Ethylenglycol, Propandiol-1,3, Decandiol-1,10, o-, m-, p-Dihydroxycyclohexan, Diethylenglycol, Dipropylenglycol und vorzugsweise Butandiol-1,4, Hexandiol-1,6 und Bis(2-hydroxyethyl)hydrochinon, oder Gemische davon; Triole, wie z.B. 1,2,4-, 1,3,5-Trihydroxycyclohexan, Glycerin und Trimethylolpropan; niedermolekulare hydroxylgruppenhaltige Polyalkylenoxide auf der Basis von Ethylen- oder 1,2-Propylenoxid; und aromatischen Diaminen, wie z.B. Toluylendiaminen oder Diaiminodiphenylmethanen oder Gemischen davon, sowie den vorgenannten Alkanolaminen, Diolen oder Triolen oder Gemischen davon als Startermoleküle.

Sofern zur Herstellung der PU-Hartschaumstoffe Kettenverlängerungsmittel, Vernetzungsmittel oder Gemische davon Anwendung finden, kommen diese zweckmäßigerweise in einer Menge von 0 bis 20 Gew.-%, vorzugsweise 2 bis 5 Gew.-%, bezogen auf das Gewicht der höhermolekularen Verbindung mit mindestens zwei reaktiven Wasserstoffatomen (b) zum Einsatz.

Zusatzstoffe f)

Dem Reaktionsgemisch zur erfindungsgemäßen Herstellung der PU-Hartschaumstoffe können ggf. auch noch Zusatzstoffe (f) zugegeben werden. Genannt seien beispielsweise oberflächenaktive Substanzen, Schaumstabilisatoren, Zellregler, Füllstoffe, Farbstoffe, Pigmente, Flammschutzmittel, Antistatika, Hydrolyseschutzmittel, fungistatisch und bakteriostatisch wirkende Substanzen.

Als oberflächenaktive Substanzen kommen z.B. Verbindungen in Betracht, die zur Unterstützung der Homogenisierung der Ausgangsstoffe dienen und ggf. auch geeignet sind, die Zellstruktur zu regulieren. Genannt seien beispielsweise Emulgatoren, wie die Natriumsalze von Ricinusölsulfaten, oder von Fettsäuren sowie Salze von Fettsäuren mit Aminen, z.B. ölsaures Diethylamin, stearinsaures Diethanolamin, ricinolsaures Diethanolamin, Salze von Sulfonsäuren, z.B. Alkali- oder Ammoniumsalze von Dodecylbenzoloder Dinaphthylmethandisulfonsäure und Ricinolsäure; Schaumstabilisatoren, wie z.B. Siloxan-Oxalkylen-Mischpolymerisate und andere Organopolysiloxane, oxyethylierte Alkylphenole, oxyethylierte Fettalkohole, Paraffinöle, Ricinusöl- bzw. Ricinolsäureester, Türkischrotöl und Erdnußöl; und Zellregler, wie z.B. Paraffine, Fettalkohole und Dimethylpolysiloxane.

Zur Verbesserung der Emulgierwirkung, der Zellstruktur und/oder der Stabilisierung des Hartschaumstoffes eignen sich ferner oligomere Polyacrylate mit Polyoxyalkylen- und Fluoralkanresten als Seitengruppen. Die oberflächenaktiven Substanzen werden üblicherweise in Mengen von 0,01 bis 5 Gew.-Teilen der mindestens einen höhermolekularen Verbindung mit mindestens zwei reaktiven Wasserstoffatomen (b) verwendet.

Als Füllstoffe, insbesondere verstärkend wirkende Füllstoffe, sind die an sich bekannten, üblichen organischen und anorganischen Füllstoffe, Verstärkungsmittel und Beschwerungsmittel zu verstehen. Im einzelnen seien beispielhaft genannt: anorganische Füllstoffe, wie z.B. silikatische Mineralien, beispielsweise Schichtsilikate wie Antigorit, Serpentin, Hornblenden, Amphibole, Chrisotil, Talkum; Metalloxide, wie Kaolin, Aluminiumoxide, Aluminiumsilikat, Titanoxid und Eisenoxide, Metallsalze wie Kreide, Schwerspat und anorganische Pigmente, wie Cadmiumsulfid, Zinksulfid sowie Glaspartikel.

Als organische Füllstoffe kommen beispielsweise in Betracht: Ruß, Melamin, Kollophonium, Cyclopentadienylharze und Pfropfpolymerisate.

Die anorganischen und organischen Füllstoffe können einzeln oder als Gemische verwendet werden und werden der Reaktionsmischung vorzugsweise in Mengen von 0,5 bis 50 Gew.-%, weiter bevorzugt 1 bis 40 Gew.-%, jeweils bezogen auf das Gewicht der Komponenten (a), (b) und, falls vorhanden, (e) beigemischt.

Geeignete Flammschutzmittel sind beispielsweise Tricresylphosphat, Tris(2-chlorethyl)phosphat, Tris (2-chlorpropyl)phosphat, Tris(1,3-dichlorpropyl)phosphat, Tris(2,3-dibrompropyl)phosphat und Tetrakis(2-chlorethyl) ethylendiphosphat.

Außer den bereits genannten halogensubstituierten Phosphaten können auch anorganische Flammschutzmittel, wie roter Phosphor, roten Phosphor enthaltende Gemische, Aluminiumoxidhydrat, Antimontrioxid, Arsenoxid, Ammoniumpolyphosphat und Calciumsulfat oder Cyanursäurederivate, wie z.B. Melamin oder Mischungen aus mindestens zwei Flammschutzmitteln, wie z.B. Ammoniumpolyphosphaten und Melamin, sowie ggf. Stärke zum Flammfestmachen der erfindungsgemäß hergestellten PU-Hartschaumstoffe verwendet werden. Im allgemeinen hat es sich als zweckmäßig erwiesen, 5 bis 50 Gew.-Teile, vorzugsweise 5 bis 25 Gew.-Teile der genannten Flammschutzmittel oder -gemische, jeweils bezogen auf 100 Gew.-Teile der Komponenten (a), (b), und falls vorhanden, (e) zu verwenden.

Nähere Angaben über die o.g. anderen üblichen Hilfs- und Zusatzstoffe sind der Fachliteratur, beispielsweise der Monographie von J.H. Saunders und K.C. Frisch "*High Polymers*", Band XVI, Polyurethanes, Teil 1 und 2, Verlag Interscience Publishers 1962 bzw. 1964 oder dem Kunststoff-Handbuch, Polyurethane, Band VII, Carl-Hanser-Verlag, München, Wien, 1. und 2. Auflage, 1966 und 1983 zu entnehmen.

Zur Herstellung der PU-Hartschaumstoffe werden die organischen, ggf. modifizierten Polyisocyanate (a), die höhermolekularen Verbindungen mit mindestens zwei reaktiven Wasserstoffatomen (b) und ggf. Kettenverlängerungsmittel und/oder Vernetzungsmittel (e) in solchen Mengen zur Umsetzung gebracht, daß das Äquivalenz-Verhältnis von NCO-Gruppen der Polyisocyanate (a) zur Summe der reaktiven Wasserstoffatome der Komponenten (b) und ggf. (e) ungefähr 0,85 bis 2,00:1, vorzugsweise ungefähr 0,95 bis 1,5:1 und insbesondere ungefähr 1,1 bis 1,4:1 beträgt. Sofern die Urethangruppen enthaltenden Schaumstoffe durch die Bildung von Isocyanuratgruppen modifiziert werden, beispielsweise zur Erhöhung der Flammwidrigkeit, wird üblicherweise ein Verhältnis von NCO-Gruppen der Polyisocyanate (a) zur Summe der reaktiven Wasserstoffatome der Komponente (b) und ggf. der Komponente (e) von ungefähr 1,8 bis 10:1, vorzugsweise ungefähr 2,0 bis 6:1 verwendet.

Die PU-Hartschaumstoffe können diskontinuierlich oder kontinuierlich nach dem Prepolymer- oder vorzugsweise nach dem One-Shot-Verfahren mit Hilfe bekannter Mischvorrichtungen hergestellt werden.

Als besonders vorteilhaft hat es sich erwiesen, nach dem Zweikomponenten-Verfahren zu arbeiten und die Komponenten (b), (c), (d) und - falls vorhanden - die Komponenten (e) und (f) als eine Komponente (A) zu vereinigen und als Komponente (B) die organischen und/oder modifizierten organischen Polyisocyanate (a) oder Gemische davon zu verwenden.

Die Ausgangskomponenten werden bei einer Temperatur von 15 bis 90 °C, vorzugsweise von 20 bis 35 °C gemischt und in ein offenes, ggf. temperiertes Formwerkzeug eingebracht, in dem man die Reaktionsmischung zur Vermeidung einer verdichteten Randzone im wesentlichen druckfrei aufschäumen läßt. Um das Formwerkzeug vollständig auszufüllen, werden üblicherweise 3 bis 40% mehr Material eingefüllt als benötigt.

Zur Bildung von Verbundelementen beschichtet man zweckmäßigerweise die Rückseite mit einer Deckschicht, z.B. durch Begießen oder Besprühen mit der schaumfähigen Reaktionsmischung, und läßt diese aufschäumen und zum PU-Hartschaumstoff aushärten.

Die nach dem erfindungsgemäßen Verfahren hergestellten PU-Hartschaumstoffe besitzen vorzugsweise Dichten von 20 bis 45 kg/m$^3$, weiter bevorzugt von 30 bis 40 kg/m$^3$ und eine Wärmeleitfähigkeit von üblicherweise kleiner als 0,035 W/m·K, beispielsweise von 0,022 (Anfangswert) bis 0,033 (Endwert) W/m·K. Vorzugsweise besitzen die erfindungsgemäß hergestellten PU-Hartschaumstoffe über 90% geschlossene Zellen.

Die PU-Hartschaumstoffe finden vorzugsweise Verwendung als wärmedämmende Zwischenschicht in Verbundelementen und zum Ausschäumen von Hohlräumen in Kühlmöbelgehäusen, insbesondere für Kühlschränke oder Gefriertruhen und als Außenmantel von Speichern, vorzugsweise Heißwasserspeichern. Die Produkte eignen sich ferner zur Isolierung von erwärmten Materialien, als Motorabdeckung und als Rohrschalen.

**BEISPIELE**

Die in den Beispielen verwendeten Polyetherpolyole wurden durch anionische Polyaddition eines Alkylenoxids an ein Startergemisch hergestellt. In Tabelle 2 sind die Produkteigenschaften aufgelistet.

Als Tallöl wird innerhalb der folgenden Beispiele ein Tallöl eingesetzt, das aus ungefähr 96 Gew.-% Fettsäuren, ungefähr 2 Gew.-% Harzsäuren und ungefähr 2 Gew.-% unverseifbaren Bestandteilen besteht, wobei sich die Summen dieser Bestandteile zu 100% addieren. Dabei beträgt der Anteil der einzelnen Fettsäuren, jeweils bezogen auf die Gesamtmenge der Fettsäuren, an Phenol- und konjugierten C$_{18}$-Fettsäuren ungefähr 93 Gew.-% und an ungesättigten Fettsäuren ungefähr 1 bis ungefähr 3 Gew.-%.

Tabelle 2

| Polyether Nr. | Startergemisch | Alkylenoxid | Hydroxylzahl | Funktionalität |
|---|---|---|---|---|
| 1 | Saccharose, Pentaerythrit, Diethylenglycol | PO | 410 | 3,9 |
| 2 | Propylenglycol | PO | 100 | 2,0 |
| 3 | Glycerin | PO | 400 | 3,0 |
| 4 | Ethylenglycol | EO | 190 | 2,0 |
| 5 | Ethylendiamin | PO | 770 | 4,0 |
| 6 | Saccharose, Glycerin | PO | 400 | 4,3 |
| 7 | Sorbit, Ethylenglycol | PO | 340 | 4,8 |

VERGLEICHSBEISPIEL 1

A-Komponente:

Mischung, enthaltend

| | |
|---|---|
| 63,10 | Gew.-Teile Polyether Nr. 6, |
| 9,00 | Gew.-Teile Ricinusöl mit einer Funktionalität f = 2,7 und einer Hydroxyzahl von 163, |
| 21,00 | Gew.-Teile Polyether Nr. 2, |
| 1,00 | Gew.-Teile eines Schaumstabilisators auf Siliconbasis (Niax Silicone Surfactant SR 321 der OSI Specialities), |
| 0,50 | Gew.-Teile N,N,N',N'-Tetramethylhexamethylendiamin, |
| 0,50 | Gew.-Teile N,N'',N''-Trimethyl-N'-2-aminoethylpiperazin, |
| 0,40 | Gew.-Teile N,N-Dimethylcyclohexylamin und |
| 4,50 | Gew.-Teile Wasser. |

B-Komponente:

Mischung aus Diphenylmethandiisocyanaten und Polyphenylen-polymethylenpolyisocyanaten (Roh-MDI) mit einem NCO-Gehalt von 31,5 Masse-%.

100 Gew.-Teile der A-Komponente und 140 Gew.-Teile der B-Komponente wurden in einem Hochdruck-Puromat PU 15 gemischt und die Reaktionsmischung in eine Bosch-Lanze eingespritzt. Man erhielt einen gleichförmigen PU-Hartschaumstoff mit Raumgewichten von 36, 38 und 40 kg/m$^3$.

Die erhaltenen Probekörper besaßen eine Druckfestigkeit von 14 bis 18 N/cm$^2$ und 90 bis 95% geschlossene Zellen. Sie nahmen 1 bis 1,5 Vol.-% Wasser auf.

Bei allen drei Raumgewichten trat ein erhöhter Schrumpf auf.

VERGLEICHSBEISPIEL 2

A-Komponente:

Mischung, enthaltend

| | |
|---|---|
| 37,35 | Gew.-Teile Polyether Nr. 1, |
| 21,00 | Gew.-Teile Polyether Nr. 2, |
| 15,00 | Gew.-Teile Polyether Nr. 3, |
| 5,00 | Gew.-Teile Polyether Nr. 4, |
| 10,00 | Gew.-Teile Ricinusöl analog Vergleichsbeispiel 1, |
| 2,50 | Gew.-Teile Polyether Nr. 5, |
| 1,50 | Gew.-Teile eines Schaumstabilisators auf Siliconbasis (Tegostab B 8423 der Goldschmidt AG, Essen), |
| 2,60 | Gew.-Teile N,N-Dimethylcyclohexylamin, |

(fortgesetzt)

| | |
|---|---|
| 0,20 | Gew.-Teile N,N'',N''-Trimethyl-N'-2-aminoethylpiperazin, |
| 0,50 | Gew.-Teile Farbpaste grün Y 1262/5 der Firma Böttler (Telgte) und |
| 4,35 | Gew.-Teile Wasser. |

B-Komponente:

analog Vergleichsbeispiel 1.

100 Gew.-Teile der A-Komponente und 160 Gew.-Teile der B-Komponente wurden in einem Hochdruck-Puromat PU 15 gemischt und die Reaktionsmischung in eine Bosch-Lanze eingespritzt. Man erhielt einen gleichförmigen PU-Hartschaumstoff mit Raumgewichten von 36, 38 und 40 kg/m$^3$.

Die erhaltenen Probekörper besaßen eine Druckfestigkeit von 14 bis 18 N/cm$^2$ und 90 bis 95% geschlossene Zellen. Sie nahmen 1 bis 1,5 Vol.-% Wasser auf.

Bei allen drei Raumgewichten trat ein erhöhter Schrumpf auf.

VERGLEICHSBEISPIEL 3

A-Komponente:

Mischung, enthaltend

| | |
|---|---|
| 63,10 | Gew.-Teile Polyether Nr. 6 |
| 9,00 | Gew.-Teile Ricinusöl analog Vergleichsbeispiel 1, |
| 21,00 | Gew.-Teile Polyether Nr. 2, |
| 1,00 | Gew.-Teile eines Schaumstabilisators auf Siliconbasis (Niax Silicone Surfactant SR 321 der OSI Specialities), |
| 0,50 | Gew.-Teile N,N,N',N'-Tetramethylhexamethylendiamin, |
| 0,50 | Gew.-Teile N,N'',N''-Trimethyl-N'-2-acninoethylpiperazin, |
| 0,40 | Gew.-Teile N,N-Dimetlrylcyclohexylamin und |
| 4,50 | Gew.-Teile Wasser. |

B-Komponente:

Mischung aus Diphenylmethandiisocyanaten und Polyphenylen-polymethylenpolyisocyanaten (Roh-MDI) mit einem NCO-Gehalt von 31,5 Masse-%.

100 Gew.-Teile der A-Komponente (Funktionalität: 3,7) und 140 Gew.-Teile der B-Komponente wurden in einem Hochdruck-Puromat PU 15 gemischt und die Reaktionsmischung in eine Bosch-Lanze eingespritzt. Man erhielt einen gleichförmigen PU-Hartschaumstoff mit Raumgewichten von 36, 38 und 40 kg/m$^3$.

Die erhaltenen Probekörper besaßen eine Druckfestigkeit von 14 bis 18 N/cm$^2$ und 90 bis 95% geschlossene Zellen. Sie nahmen 1 bis 1,5 Vol.-% Wasser auf.

Bei allen drei Raumgewichten trat ein erhöhter Schrumpf auf.

VERGLEICHSBEISPIEL 4

A-Komponente:

Mischung, enthaltend

| | |
|---|---|
| 36,70 | Gew.-Teile Polyether Nr. 7, |
| 15,00 | Gew.-Teile Polyether Nr. 3, |

(fortgesetzt)

| 22,00 | Gew.-Teile Polyether Nr. 2, |
|---|---|
| 2,50 | Gew.-Teile Polyether Nr. 5, |
| 5,00 | Gew.-Teile Polyether Nr. 4, |
| 10,00 | Gew.-Teile Tallöl, |
| 1,50 | Gew.-Teile eines Schaumstabilisators auf Siliconbasis (Niax Silicone Surfactant SR 321 der OSI Specialities), |
| 2,60 | Gew.-Teile N,N'-Dimethylcyclohexylamin, |
| 0,20 | Gew.-Teile N,N'',N''-Trimethyl-N'-2-aminoethylpiperazin und |
| 4,50 | Gew.-Teile Wasser. |

B-Komponente:

Mischung aus Diphenylmethandiisocyanaten und Polyphenylenpolymethylenpolyisocyanaten (Roh-MDI) mit einem NCO-Gehalt von 31,5 Masse-%.

100 Gew.-Teile der A-Komponente (Funktionalität: 3,1) und 155 Gew.-Teile der B-Komponente wurden in einem Hochdruck-Puromat PU 15 gemischt und die Reaktionsmischung in eine Bosch-Lanze eingespritzt. Man erhielt einen gleichförmigen PU-Hartschaumstoff mit Raumgewichten von 36, 38 und 40 kg/m$^3$.

Die erhaltenen Probekörper besaßen eine Druckfestigkeit von 14 bis 18 N/cm$^2$ und 90 bis 95% geschlossene Zellen. Sie nahmen 1 bis 1,5 Vol.-% Wasser auf. Bei allen drei Raumgewichten trat ein erhöhter Schrumpf auf.

VERGLEICHSBEISPIEL 5

A-Komponente:

Mischung, enthaltend

| 37,35 | Gew.-Teile Polyether Nr. 1, |
|---|---|
| 21,00 | Gew.-Teile Polyether Nr. 2, |
| 15,00 | Gew.-Teile Polyether Nr. 3, |
| 5,00 | Gew.-Teile Polyether Nr. 4, |
| 10,00 | Gew.-Teile Ricinusöl analog Vergleichsbeispiel 1, |
| 2,50 | Gew.-Teile Polyether Nr. 5, |
| 1,50 | Gew.-Teile eines Schaumstabilisators auf Siliconbasis (Tegostab B 8423 der Goldschmidt AG, Essen), |
| 2,60 | Gew.-Teile N,N-Dimethylcyclohexylamin |
| 0,20 | Gew.-Teile N,N'',N''-Trimethyl-N'-2-aminoethylpiperazin, |
| 0,50 | Gew.-Teile Farbpaste grün Y 1262/5 der Firma Böttler (Telgte) und |
| 4,35 | Gew.-Teile Wasser. |

B-Komponente:

analog Vergleichsbeispiel 1.

100 Gew.-Teile der A-Komponente (Funktionalität: 2,65) und 160 Gew.-Teile der B-Komponente wurden in einem Hochdruck-Puromat PU 15 gemischt und die Reaktionsmischung in eine Bosch-Lanze eingespritzt. Man erhielt einen gleichförmigen PU-Hartschaumstoff mit Raumgewichten von 36, 38 und 40 kg/m$^3$.

Die erhaltenen Probekörper besaßen eine Druckfestigkeit von 14 bis 18 N/cm$^2$ und 90 bis 95% geschlossene Zellen. Sie nahmen 1 bis 1,5 Vol.-% Wasser auf.

Bei allen drei Raumgewichten trat ein erhöhter Schrumpf auf.

Diese Vergleichsbeispiele zeigen, daß bei der Verwendung eines Gemisches aus Wasser und einer Substanz wie Ricinusöl als Treibmittel, wie aus dem Stand der Technik bekannt, die erhaltenen PU-Hartschaumstoff-Probekörper einen erhöhten Schrumpf aufweisen (Vergleichsbeispiele 1 und 2).

Das gleiche gilt, sofern als Treibmittel ausschließlich Wasser verwendet wird, und zwar unabhängig davon, ob die Funktionalität der mindestens einen höhermolekularen Verbindung mit mindestens zwei reaktiven Wasserstoffatomen (b) sowie dem niedermolekularen Kettenverlängerungs- und/oder - vernetzungsmittel (e) oberhalb von 3 oder innerhalb des erfindungsgemäßen Bereichs von nicht höher als 3 liegen (Vergleichsbeispiele 3 und 5).

Vergleichsbeispiel 4 zeigt, daß auch die Verwendung eines Gemisches aus Tallöl und Wasser als Treibmittel nicht zu den gewünschten schrumpffreien Probekörpern führt, sofern die Funktionalität der A-Komponente außerhalb des erfindungsgemäß beanspruchten Bereichs von höchstens 3 liegt.

BEISPIEL 1

A-Komponente:

Mischung, enthaltend

| 37,35 | Gew.-Teile Polyether Nr. 1, |
|---|---|
| 21,00 | Gew.-Teile Polyether Nr. 2, |
| 15,00 | Gew.-Teile Polyether Nr. 3, |
| 5,00 | Gew.-Teile Polyether Nr. 4, |
| 10,00 | Gew.-Teile Tallöl, |
| 2,50 | Gew.-Teile Polyether Nr. 5, |
| 1,50 | Gew.-Teile eines Schaumstabilisators auf Siliconbasis (Tegostab B 8423 der Goldschmidt AG, Essen), |
| 2,60 | Gew.-Teile N,N-Dimethylcyclohexylamin, |
| 0,20 | Gew.-Teile N,N'',N''-Trimethyl-N'-2-aminoethylpiperazin, |
| 0,50 | Gew.-Teile Farbpaste grün Y 1262/5 der Firma Böttler (Telgte) und |
| 4,35 | Gew.-Teile Wasser. |

B-Komponente:

analog Vergleichsbeispiel 1.

100 Gew.-Teile der A-Komponente (Funktionalität: 2,6) und 157 Gew.-Teile der B-Komponente wurden in einem Hochdruck-Puromat PU 15 gemischt und die Reaktionsmischung in eine Bosch-Lanze eingespritzt. Man erhielt einen gleichförmigen PU-Hartschaumstoff mit einem Raumgewicht von 40 kg/m$^3$.

Die erhaltenen Probekörper besaßen eine Druckfestigkeit von 22 N/cm$^2$ und 92% geschlossene Zellen. Sie nahmen 1,1 Vol.-% Wasser auf. Die Probekörper wiesen keinen Schrumpf mehr auf.

BEISPIEL 2

A-Komponente:

Mischung, enthaltend

| 36,70 | Gew.-Teile Polyether Nr. 1, |
|---|---|
| 22,00 | Gew.-Teile Polyether Nr. 2, |
| 15,00 | Gew.-Teile Polyether Nr. 3, |
| 10,00 | Gew.-Teile Tallöl, |
| 5,00 | Gew.-Teile Polyether Nr. 4, |
| 2,50 | Gew.-Teile Polyether Nr. 5, |
| 1,50 | Gew.-Teile eines Schaumstabilisators auf Siliconbasis (Tegostab B 8423 der Goldschmidt AG, Essen), |
| 2,60 | Gew.-Teile N,N-Dimethylcyclohexylamin, |

(fortgesetzt)

| 0,20 | Gew.-Teile N,N'',N''-Trimethyl-N'-2-aminoethylpiperazin und |
| 4,50 | Gew.-Teile Wasser. |

B-Komponente:

analog Vergleichsbeispiel 1.

100 Gew.-Teile der A-Komponente (Funktionalität: 2,6) und 157 Gew.-Teile der B-Komponente wurden in einem Hochdruck-Puromat PU 15 gemischt und die Reaktionsmischung in eine Bosch-Lanze eingespritzt. Man erhielt einen gleichförmigen PU-Hartschaumstoff mit einem Raumgewicht von 38 kg/m$^3$.
Die erhaltenen Probekörper besaßen eine Druckfestigkeit von 18 N/cm$^2$ und 91% geschlossene Zellen. Sie nahmen 1,9 Vol.-% Wasser auf.
Die Probekörper wiesen keinen Schrumpf mehr auf.


**Patentansprüche**

**1.** Verfahren zur Herstellung eines Polyurethan-Hartschaumstoffen durch Umsetzung der folgenden Aufbaukomponenten a) und b)

   a) organisches oder modifiziertes organisches Polyisocyanat oder ein Gemisch aus zwei oder mehr davon

   b) mindestens eine höhermolekulare Verbindung mit mindestens zwei reaktiven Wasserstoffatomen, die unter einem Polyetherpolyol oder einem Gemisch aus zwei oder mehr davon ausgewählt wird
   in Gegenwart

   c) eines Treibmittels, enthaltend Tallöl und Wasser, und

   d) eines Katalysators,

   **dadurch gekennzeichnet,**
   **daß** die Aufbaukomponente b) eine Funktionalität Fkt, berechnet gemäß unten stehender Gleichung (I)

$$Fkt = \frac{\Sigma(n \bullet f^2)}{\Sigma(n \bullet f)} \tag{I}$$

   worin n den molaren Anteil einer Verbindung und f die Funktionalität dieser Verbindung bezeichnet, von 2,5 bis 2,9 besitzt.

**2.** Verfahren nach Anspruch 1, wobei als weitere Aufbaukomponente (e) ein niedermolekulares Kettenverlängerungsmittel oder ein niedermolekulares Vemetzungsmittel oder ein Gemisch aus zwei oder mehr davon eingesetzt werden.

**3.** Verfahren nach Anspruch 1 oder 2, wobei die Umsetzung in Gegenwart von zusätzlich

   f) einem Zusatzstoff

   durchgeführt wird.

**4.** Verfahren nach einem der Ansprüche 1 bis 3, wobei der Gehalt an Tallöl mehr als 9 Gewichtsteile, bezogen auf 100 Gewichtsteile der Aufbaukomponente b), beträgt.

**5.** Verfahren nach einem der Ansprüche 1 bis 4, wobei das Treibmittel c) zusätzlich mindestens eine Carbonsäure mit mehr als 3 C-Atomen enthält, die verschieden von den sich im Tallöl befindlichen Fettsäuren ist, enthält.

**6.** Verfahren nach mindestens einem der Ansprüche 1 bis 5, wobei das organische Polyisocyanat (a) ausgewählt wird aus der Gruppe bestehend aus 4,4'-Diphenylmethandiisocyanat, 2,4'-Diphenylmethandiisocyanat, 2,2'-Diphenylmethandiisocyanat, Polyphenylpolymethylenpolyisocyanaten, 2,4-Toluylendiisocyanat, 2,6-Toluylendiisocyanat, Mischungen aus Diphenylmethandiisocyanaten und Polyphenylpolymethylenpolyisocyanaten mit einem Diphenylmethan-diisocyanat-Isomerengehalt von 30 bis 80 Gew.-% und Gemischen aus zwei oder mehr davon.

**7.** Verfahren nach einem der Ansprüche 1 bis 6, wobei die höhermolekulare Verbindung (b) ausgewählt wird aus der Gruppe bestehend aus Polyetherpolyolen, die hergestellt werden durch anionische Polyaddition von mindestens einem Alkylenoxid an mindestens eine, mindestens eine Hydroxyl, Amino- oder Carboxylgruppe oder mehrere dieser Gruppen aufweisende Verbindung mit mindestens zwei reaktiven Wasserstoffatomen als Startermolekül, und Polyetherpolyolen, die hergestellt werden durch anionische Polyaddition von mindestens einem Alkylenoxid an mindestens ein Startermolekül aus der Gruppe der Polycarbonsäuren, Hydroxycarbonsäuren und Aminocarborsäuren, der Mono- und Polyamine, der Polyphenole und der Mannich-Kondensate aus Phenolen, Formaldehyd und Dialkanolaminen.

**8.** Verfahren nach einem der Ansprüche 1 bis 7, wobei die hergestellten Polyurethan-Hartschaumstoffe über 90% geschlossene Zellen besitzen.

**9.** Polyurethan-Hartschaumstoff herstellbar durch Umsetzung der folgenden Aufbaukomponenten a) und b)

    a) organisches oder modifiziertes organisches Polyisocyanat oder ein Gemisch aus zwei oder mehr davon

    b) mindestens eine höhermolekulare Verbindung mit mindestens zwei reaktiven Wasserstoffatomen, die unter einem Polyetherpolyol oder einem Gemisch aus zwei oder mehr davon ausgewählt wird
    in Gegenwart

    c) eines Treibmittels, enthaltend Tallöl und Wasser, und

    d) eines Katalysators,

**dadurch gekennzeichnet,**
**daß** die Aufbaukomponente b) eine Funktionalität Fkt, berechnet gemäß unten stehender Gleichung (I)

$$Fkt = \frac{\Sigma(n \bullet f^2)}{\Sigma(n \bullet f)} \tag{I}$$

worin n den molaren Anteil einer Verbindung und f die Funktionalität dieser Verbindung bezeichnet, von 2,5 bis 2,9 besitzt.

**10.** Verwendung eines von Polyurethan-Hartschaumstoffen, hergestellt nach einem Verfahren gemäß mindestens einem der Ansprüche 1 bis 8, oder eines Polyurethan-Hartschaumstoffs gemäß Anspruch 9, als Zwischenschicht für Verbundelemente und zum Ausschäumen von Hohlräumen in Kühlmöbelgehäusen, Speichern oder Heizungselementen.

**Claims**

**1.** A process for producing a rigid polyurethane foam by reacting the following formative components a) and b)

    a) an organic or modified organic polyisocyanate or a mixture of two or more of these
    b) at least one relatively high molecular weight compound containing at least two reactive hydrogen atoms, selected from among polyether polyols and mixtures of two or more of these
    in the presence of
    c) a blowing agent comprising tall oil and water and
    d) a catalyst,

wherein the formative component b) has a functionality Fcy, calculated according to the equation (I) below

$$Fkt = \frac{\Sigma(n \bullet f^2)}{\Sigma(n \bullet f)} \qquad \text{(I)}$$

where n is the molar proportion of a compound and f is the functionality of this compound, of from 2.5 to 2.9.

2. A process as claimed in claim 1, wherein a low molecular weight chain extender or a low molecular weight crosslinker or a mixture of two or more of these is used as a further formative component (e).

3. A process as claimed in claim 1 or 2, wherein the reaction is carried out in the additional presence of

   (f) an additive.

4. A process as claimed in any of claims 1 to 3, wherein the tall oil content is more than 9 parts by < weight, based on 100 parts by weight of the formative component b).

5. A process as claimed in any of claims 1 to 4, wherein the blowing agent c) additionally contains at least one carboxylic acid having more than 3 carbon atoms which is different from the fatty acids present in the tall oil.

6. A process as claimed in any of claims 1 to 5, wherein the organic polyisocyanate (a) is selected from the group consisting of diphenylmethane 4,4'-diisocyanate, diphenylmethane 2,4'-diisocyanate, diphenylmethane 2,2'-diisocyanate, polyphenylpolymethylene polyisocyanates, tolylene 2,4-diisocyanate, tolylene 2,6-diisocyanate, mixtures of diphenylmethane diisocyanates and polyphenylpolymethylene polyisocyanates having a diphenylmethane diisocyanate isomer content of from 30 to 80% by weight, and mixtures of two or more of these.

7. A process as claimed in any of claims 1 to 6, wherein the relatively high molecular weight compound (b) is selected from the group consisting of polyether polyols prepared by anionic polyaddition of at least one alkylene oxide onto at least one compound containing at least two reactive hydrogen atoms and at least one hydroxyl, amino or carboxyl group or a plurality of these groups as initiator molecule, and polyether polyols prepared by anionic polyaddition of at least one alkylene oxide onto at least one initiator molecule selected from the group consisting of polycarboxylic acids, hydroxycarboxylic acids and aminocarboxylic acids, monoamines and polyamines, polyphenols and Mannich condensates of phenols, formaldehyde and dialkanolamines.

8. A process as claimed in any of claims 1 to 7, wherein the rigid polyurethane foams produced have over 90% of closed cells.

9. A rigid polyurethane foam which can be produced by reacting the following formative components a) and b)

   a) an organic or modified organic polyisocyanate or mixture of two or more of these
   b) at least one relatively high molecular weight compound containing at least two reactive hydrogen atoms, selected from among polyether polyols and mixtures of two or more of these
   in the presence of
   c) a blowing agent comprising tall oil and water and
   d) a catalyst,

   wherein the formative component b) has a functionality Fcy, calculated according to the equation (I) below

$$Fkt = \frac{\Sigma(n \bullet f^2)}{\Sigma(n \bullet f)} \qquad \text{(I)}$$

   where n is the molar proportion of a compound and f is the functionality of this compound, of from 2.5 to 2.9.

10. The use of rigid polyurethane foams produced by a process as claimed in any of claims 1 to 8, or of a rigid polyurethane foam as claimed in claim 9, as intermediate layer for composite elements and for filling hollow spaces in refrigeration appliance housings, storages or heating elements with foam.

**EP 0 803 523 B1**

**Revendications**

1.  Procédé de production d'une mousse de polyuréthane rigide par transformation des composants suivants a) et b)

    a) poly-isocyanate organique ou modifié ou un mélange de deux ou de plusieurs de ces composants,
    b) au moins une liaison de poids moléculaire élevé avec au moins deux atomes d'hydrogène réactifs sélectionnés entre un polyétherpolyol ou un mélange de deux ou de plusieurs de ces composants, en présence
    c) d'un agent moussant contenant du tallol et de l'eau et
    d) d'un catalyseur,
    **caractérisé en ce que** les composants b) possèdent une fonctionnalité Fct de 2,5 à 2,9, calculée selon l'équation suivante (I)

$$Fkt = \frac{\Sigma(n^*f^2)}{\Sigma(n^*f)} \tag{I}$$

    où n représente la portion molaire d'une liaison et f, la fonctionnalité de cette liaison.

2.  Procédé selon la revendication 1, dans lequel est utilisé comme autre composant un moyen de prolongement de chaîne de bas poids moléculaire ou un moyen de réticulation de bas poids moléculaire ou un mélange de deux ou de plusieurs de ces composants.

3.  Procédé selon la revendication 1 ou 2, dans lequel la transformation s'effectue en outre en présence d'un

    f) additif.

4.  Procédé selon l'une quelconque des revendications 1 à 3, dans lequel la teneur en tallol est de 9 parties en poids pour 100 parties en poids des composants b).

5.  Procédé selon l'une quelconque des revendications 1 à 4, dans lequel l'agent moussant c) comprend en outre au moins un acide carboxylique avec plus de 3 atomes de carbone, qui est différent des acides gras se trouvant dans le tallol.

6.  procédé selon au moins l'une des revendications 1 à 5, dans lequel le poly-isocyanate organique (a) est sélectionné dans le groupe constitué de 4,4-diphénylméthane-diisocyanate, 2,4-diphénylméthane-diisocyanate, 2,2-diphényl-méthane-di-isocyanate, polyphénylpolyméthylène-poly-isocyanates, 2,4-toluylène-diisocyanate, 2,6-toluylène-diisocyanate, des mélanges de diphényl-méthane-diisocyanates et de polyphénylpolyméthylène-poly-isocyanates avec une teneur en diphénylméthane-diisocyanate-isomère de 30 à 80 % en poids et des mélanges de deux ou de plusieurs de ces composants.

7.  Procédé selon l'une quelconque des revendications 1 à 6, dans lequel la liaison de poids moléculaire élevé (b) est sélectionnée dans le groupe constitué des polyétherpolyols qui sont produits par polyaddition anionique d'au moins un oxyde d'alkylène à au moins une liaison présentant au moins un groupe hydroxylique, amino ou carboxylique ou plusieurs de ces groupes avec au moins deux atomes d'hydrogène réactifs comme molécule de départ et des polyétherpolyols qui sont produits par polyaddition anionique d'au moins un oxyde d'alkylène à au moins une molécule de départ du groupe des acides poly-carboxyliques, des acides hydrocarboxyliques et des acides aminocarboxyliques, des mono et polyamines, des polyphénols et des produits de condensation manniques de phénols, de formaldéhyde et de dialcano-amines.

8.  Procédé selon l'une quelconque des revendications 1 à 7, dans lequel les mousses de polyuréthane rigides produites possèdent plus de 90 % de cellules fermées.

9.  Mousse de polyuréthane rigide produite par transformation des composants suivants a) et b)

    a) poly-isocyanate organique ou modifié ou un mélange de deux ou de plusieurs de ces composants,
    b) au moins une liaison de poids moléculaire élevé avec au moins deux atomes d'hydrogène réactifs sélectionnés entre un polyétherpolyol ou un mélange de deux ou de plusieurs de ces composants, en présence
    c) d'un agent moussant contenant du tallol et de l'eau et

d) d'un catalyseur,

**caractérisé en ce que** les composants b) possèdent une fonctionnalité Fct de 2,5 à 2,9, calculée selon l'équation suivante (I)

$$Fkt = \frac{\Sigma(n*f^2)}{\Sigma(n*f)} \qquad (I)$$

où n représente la portion molaire d'une liaison et f la fonctionnalité de cette liaison.

10. utilisation d'une mousse de polyuréthane rigide produite d'après un procédé selon au moins l'une des revendications 1 à 8 ou d'une mousse de polyuréthane rigide selon la revendication 9, en couche intermédiaire d'éléments composites et pour le remplissage en mousse d'espaces creux dans des cavités de réfrigérateurs, d'accumulateurs ou d'éléments de chauffage.